**Europäisches Patentamt**

**European Patent Office**

**Office européen des brevets**

(19)

(11) Veröffentlichungsnummer: **0 501 365 A2**

(12) **EUROPÄISCHE PATENTANMELDUNG**

(21) Anmeldenummer: **92103044.1**

(22) Anmeldetag: **24.02.92**

(51) Int. Cl.5: **G01F 11/28**

(30) Priorität: **26.02.91 DE 4105939**

(43) Veröffentlichungstag der Anmeldung:
**02.09.92 Patentblatt 92/36**

(84) Benannte Vertragsstaaten:
**AT BE CH DE ES FR GB IT LI NL SE**

(71) Anmelder: **Laskowski, Sigismund**
**Kallstadterstrasse 127**
**W-6700 Ludwigshafen/Rhein(DE)**

(72) Erfinder: **Laskowski, Sigismund**
**Kallstadterstrasse 127**
**W-6700 Ludwigshafen/Rhein(DE)**

(74) Vertreter: **Ratzel, Gerhard, Dr.**
**Seckenheimer Strasse 36a**
**W-6800 Mannheim 1(DE)**

(54) **Verfahren und Vorrichtung zum Dosieren von flüssigen Substanzen aus einem Spendegutbehälter.**

(57) Die Erfindung betrifft ein Verfahren und eine Vorrichtung zum Dosieren von flüssigen Substanzen aus einem Spendegutbehälter mit dem (der) mittels eines unterhalb des Behälters angeordneten, biegeelastischen Ausguß-teils die Dosierung des Spendeguts erfolgt, in dem durch Schwenken, Biegen oder dergleichen des Ausgußteils ein, zwischen zwei Quetschstellen liegender Meßraum gebildet wird, dessen Austrittsöffnung im Bereich der ersten Quetschstelle erst öffnet, nachdem der Durchströmkanal im Bereich der zweiten Quetschstelle zum Spendebehälter geschlossen ist.

Fig.3

Die Erfindung betrifft ein Verfahren und eine Vorrichtung zum Dosieren von flüssigen Substanzen aus einem Spendegutbehälter.

Beim Umgang mit medizinischen, giftigen oder umweltgefährdenden Substanzen bedarf es einer genauen und sicheren Dosierung.

Zum Zwecke solcher Dosiervorgänge sind Vorrichtungen bekannt, bei welchen ein Meßraum über einen Verbindungskanal mit einem Spendebehälter verbindbar sind, wobei beispielsweise ein Kolben innerhalb des Meßraums angeordnet ist und somit durch Verfahren des Kolbens das Volumen des Meßraumes festgelegt wird.

Aus der DE-OS 39 12 927 ist ein universelles, verstellbares, exaktes Dosiersystem für nachgebende und nicht nachgebende Spendebehälter bekannt, bei der das Dosiervolumen nachträglich korrigiert werden kann.

Demgegenüber liegt der vorliegenden Erfindung die Aufgabe zugrunde, ein Verfahren und eine Vorrichtung zu schaffen, mit dem (der) die Dosierung nicht durch eine persönliche Meßarbeit des Anwenders erfolgt, sondern diese Dosierung durch wenige Handgriffe des Anwenders ohne Sichtkontakt erfolgen kann.

Diese Aufgabe wird durch ein Verfahren gemäß des vorgeschlagenen Anspruchs 1 und durch eine Vorrichtung gemäß des vorgeschlagenen Anspruchs 4 zur Durchführung des Verfahrens gelöst, wobei besondere Alternativen bzw. Ausführungsformen der Erfindung in den Unteransprüchen gekennzeichnet sind.

Es wird erfindungsgemäß erreicht, daß ein beliebiger Spendebehälter, dies kann ein Kanister, eine Flasche oder Dose etc. sein, vorzugsweise am Behälterkopf oder Ausgießbereich mit der erfindungsgemäßen Ausgieß- und Dosiervorrichtung bestückt wird.

In einer einfachsten Ausführungsform, bei der der Spendebehälter als Flasche ausgebildet ist, wird der Drehverschluß durch die erfindungsgemäße Ausgieß- und Dosiervorrichtung ersetzt, die zu diesem Zwecke einen Anschlußteil, ausbildungsgemäß wie der Drehverschluß, aufweist, und auf den Behälterhals aufgeschraubt wird. Im Gegensatz zum Drehverschluß ist dieser Anschlußteil nicht als verschlossener Deckel ausgebildet, sondern weist beispielsweise einen biegeelastischen Ausgußteil auf, so daß das Spendegut aus dem Spendebehälter durch das Anschlußteil hindurch in das Ausgußteil strömen kann. Das Ausgußteil weist zwei Quetsch- oder Knickstellen auf, von denen in der Ausgangsstellung zumindest eine abgeknickt ist, derart, daß das Spendegut nicht auslaufen kann. Zwischen den beiden Quetschlippen befindet sich der eigentliche Meßraum.

Bei einer bevorzugt ausgewählten Ausgangsstellung ist die erste Quetschlippe im Bereich der Austrittsöffnung geschlossen und die zweite Quetschlippe im Bereich des Durchströmkanals nahe des Spendegutbehälters geöffnet, so daß das Spendegut ungehindert in den Meßraum einfließen kann. Durch Schwenken, Knicken oder Biegen des Ausgußteiles schließt die zweite Quetschlippe den Durchströmkanal und der Meßraum ist ähnlich einer Schleuse im Bereich des Einströmkanals und der Austrittsöffnung geschlossen. Durch gegebenenfalls Weiterbiegen des Anschlußteiles oder durch Biegen in eine andere Achsausrichtung bleibt der Durchströmkanal im Bereich der zweiten Quetschlippe geschlossen und die erste Quetschlippe im Bereich der Ausgießöffnung öffnet sich und das dosierte Spendegut aus dem Meßraum kann ausfließen. Um diese Bewegungsabläufe zu koordinieren ist am Ausgußteil eine Distanzstrebe angeordnet, die diese Bewegungsabläufe steuert. Das heißt, diese Distanzstrebe zeichnet dafür verantwortlich, daß durch ihre fixierte Länge und Befestigungspunkte die Abknickungen an den Quetschstellen/lippen zeitlich derart abgestimmt werden, daß eine Öffnung des Durchströmkanales erst erfolgen kann, wenn die Austrittsöffnung geschlossen ist.

Anhand den beigefügten Zeichnungen, die besonders bevorzugte Ausführungsbeispiele der Erfindung zeigen, wird diese nun näher beschrieben.

Dabei zeigen:

Figur 1 und Figur 2     die ausgewählte Ausgangsstellung, bei der der Durchströmkanal im Bereich der zweiten Quetschlippe geöffnet und die Austrittsöffnung im Bereich der ersten Quetschlippe geschlossen ist.

Figur 3 und Figur 4     eine Zwischenstellung, bei der der Meßraum geschlossen ist, in dem beide Quetschlippen die Austrittsöffnung und den Durchströmkanal sperren.

Figur 5 und Figur 6     die Stellung, bei der das dosierte Spendegut ausfließen kann, in dem der Durchströmkanal durch die zweite Quetschlippe gesperrt und die Austrittsöffnung durch die erste Quetschlippe geöffnet ist.

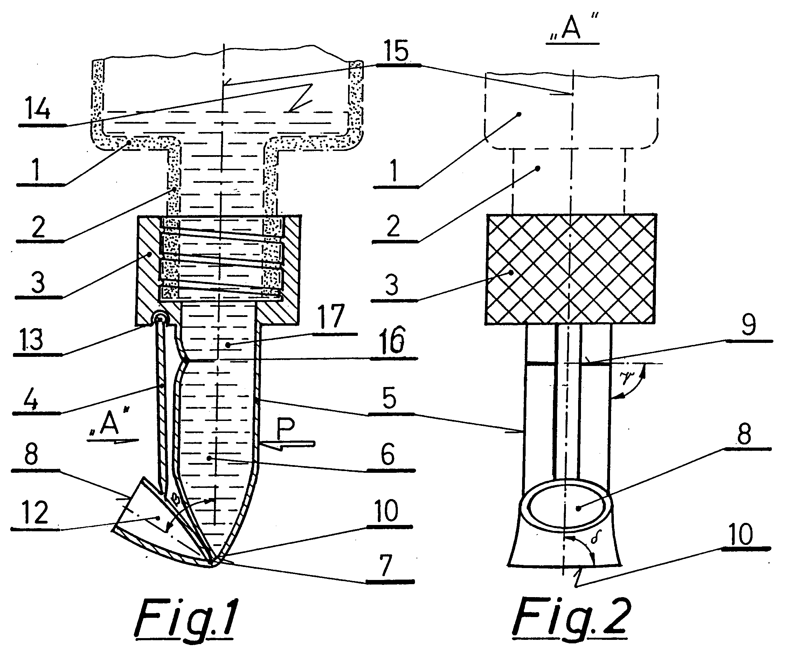

Figur 1 zeigt einen Querschnitt durch die erfindunsgemäße Vorrichtung.

Figur 2 zeigt eine Ansicht der Vorrichtung aus der in Figur 1 angedeuteten Richtung A.

Anhand den Figuren 1 und 2 wird die erste Phase des erfindungsgemäßen Verfahrens beschrieben.

Zu erkennen ist ein Spendegutbehälter 1 in Form einer Flasche. Im Bereich des Flaschenhalses 2, der mit einem Außengewinde 19 versehen ist, ist die erfindungsgemäße Dosier- und Ausgußvorrichtung aufgeschraubt, die wie folgt ausgebildet ist:

Es ist ein biegeelastisches Ausgußteil 5 vorgesehen, das an seinem zum Spendegutbehälter 1 hinweisenden Ende ein Anschlußteil 3 aufweist. Mit diesem Anschlußteil 3, das ein Innengewinde 18 aufweist, wird die Gesamteinheit auf den Spendegutbehälter 1 bzw. dessen Hals 2 aufgeschraubt. Hier kommt auch jedes andere geeignete Anschlußteil in Frage, das entsprechend den Verhältnissen des Spendegutbehälters anzupassen ist.

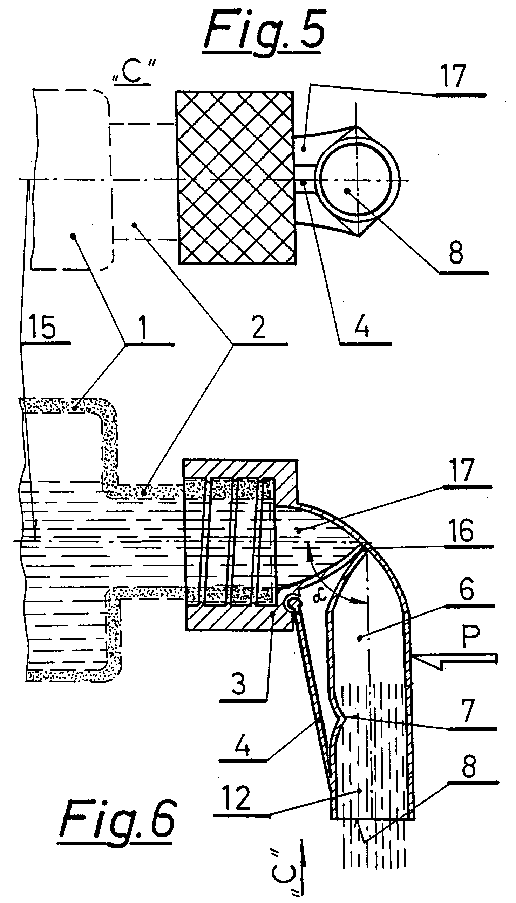

Neben dem Anschlußteil 3 ist das Ausgußteil 5 in mehrere Teilbereiche gegliedert. Vorteilhafterweise besteht die Gliederung aus einem Vorraum 17, einem Meßraum 6 und einem Ausgußbereich 8. Der Meßraum 6 ist zwischen dem Vorraum 17 und dem Ausgußteilbereich 8 angeordnet, wobei die Abgrenzung durch die Quetschlippen 9 und 10 erfolgt. Diese Quetschlippen 9 und 10 werden wiederum durch Einschnürungen oder Verjüngungen 16 bzw. 7 des vorzugsweise röhrenförmigen Ausgußteils 5 gebildet. Je nach Stellung des Ausgußteils 5 befindet sich im Bereich der Quetschlippen 9 und 10 ein Durchströmkanal 12 bzw. eine Austrittsöffnung 11, die jeweils in Sperr- oder Freigabestellung positioniert sind. Die hier in Figur 1 ausgewählte Ausgangsstellung wird durch eine Distanzstrebe 4 fixiert, die im Punkt 13 im Bereich des Anschlußstückes 13 und am Ausgußteilbereich 8 befestigt ist. Die Länge der Distanzstrebe 4 ist derart gewählt, daß ohne Betätigung, also ohne Krafteinwirkung der Ausgußteilbereich 8 derart abgewinkelt wird, daß die Quetschlippe 10, begünstigt durch die Einschnürung bzw. Verjüngung 7 derart eingeknickt ist, daß die Austrittsöffnung 11 (siehe Figur 6) gesperrt ist. Bei dieser Ausgangsstellung, bei der durch Abknicken des Ausgußteilbereiches 8 die Austrittsöffnung 11 gesperrt ist, ist der Durchströmkanal 12 im Bereich der Quetschlippe 9 bzw. der Einschnürung/Verjüngung 16 geöffnet, so daß das Spendegut 14 aus dem Spendegutbehälter 1 durch den Vorraum 17 in den Meßraum 6 einfließen kann.

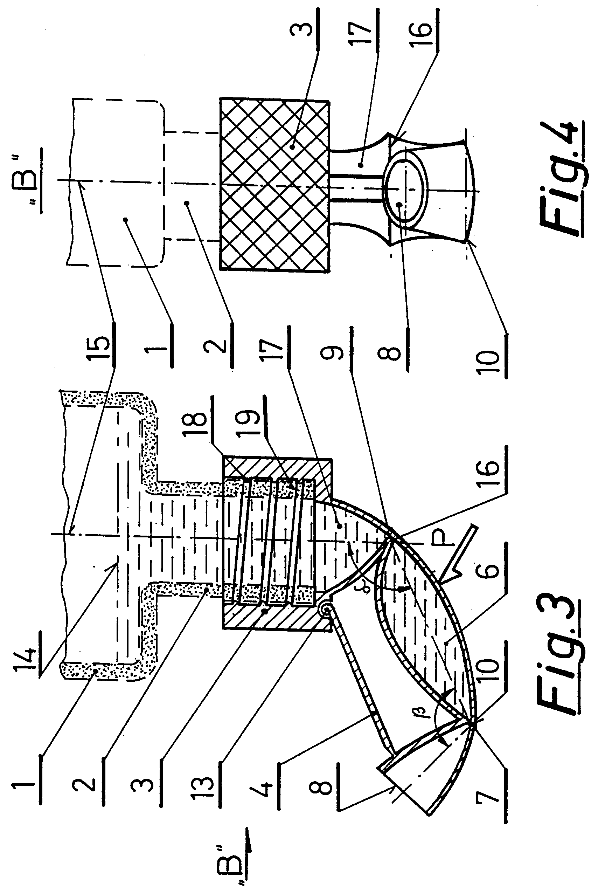

Die Figur 3 zeigt einen Querschnitt durch eine Zwischenstellung der erfindungsgemäßen Vorrichtung und die Figur 4 eine Ansicht aus der in Figur 3 angedeuteten Richtung B.

Anhand der in Figuren 3 und 4 wird nun die zweite Phase des erfindungsgemäßen Verfahrens beschrieben: Durch die Krafteinwirkung, die symbolisch mit dem Pfeil P dargestellt ist, wird das Ausgußteil 5 derart abgeknickt, daß der Meßraum 6 vom Vorraum 17 flüssigkeitsdicht gesperrt wird. Ebenfalls eine flüssigkeitsdichte Sperre liegt im Bereich der Quetschlippe 10 vor. Durch die Quetschlippen 9 und 10 wird also schleusenartig der Meßraum 6 gebildet bzw. von dem Vorraum 17 und dem Ausgußteilbereich 8 abgegrenzt. Diese Zwischensituation wird durch die Ausbildung der Distanzstrebe 4, wie bereits zuvor geschildert, begünstigt, so daß die Winkelstellung $\beta$ und die Winkelstellung $\alpha$ des Ausgußteils 5 bzw. deren Quetschlippen 9 und 10 ein Einströmen des Spendegutes 14 bzw. ein Ausfließen desselben im Bereich des Ausgußteilbereiches 8 verhindern. Es ist somit die Phase der exakten Dosierung des Spendegutes erfolgt.

Die Figur 5 zeigt eine Ansicht aus der in Figur 6 angedeuteten Richtung C und die Figur 6 einen Querschnitt durch die erfindungsgemäße Vorrichtung. Anhand den Figuren 5 und 6 wird nun die dritte Phase des erfindungsgemäßen Verfahrens beschrieben:

In diesem Ausführungsbeispiel wird durch das Weiterbewegen des Ausgußteiles 5, angedeutet durch die Kraftrichtung des Pfeiles P, das Ausgußteil 5 in nahezu einer rechtwinkligen Stellung (Winkel $\alpha$) zur Achse 15 des Spendegutbehälters gebracht, so daß im Bereich der Quetschlippe 9 die flüssigkeitsdichte Sperre zwischen Meßraum 6 und Vorraum 17 erhalten bleibt. Jedoch wird durch die Distanzstrebe 4 begünstigt, die Abknickung im Bereich der Quetschlippe 10 bzw. der Einschnürung 7 aufgehoben, so daß die Austrittsöffnung 11 im Ausgußbereich 8 freigegeben wird und das dosierte Spendegut freigegeben wird.

Mit dem erfindungsgemäßen Verfahren und der erfindungsgemäßen Vorrichtung zur Durchführung des Verfahrens wird eine sehr präzise Dosierung von giftigen, medizinischen oder anderen gleichzubehandelnden Substanzen gewährleistet. Insbesondere von zu dosierenden Substanzen, die tropfenweise anzuwenden sind, können mit dem vorgeschlagenen Verfahren und der vorgeschlagenen Vorrichtung exakt und fehlerlos dosiert werden.

Über die vorgeschlagene Ausführungsformen hinaus besteht erfindungsgemäß auch die Möglichkeit, durch die Anordnung mehrerer, in Eingriff bringbaren Distanzstreben, verschieden geartete Meßräume auszubilden bzw. anzuordnen.

Die Variation des Meßraumes kann auch durch entsprechende Reduktionsstücke vorgenommen werden, die in dem Meßraum eingesetzt bzw. entnommen werden.

Die Anordnung der Vorrichtung unterhalb des Behältnisses versteht sich für Spendegutbehälter, bei denen das Spendegut schwerkraftbedingt ausläuft.

Es kann jedoch auch die Anwendung für unter Druck stehende Behälter in Betracht gezogen werden, so daß das Umdrehen des Systems nicht zwingend notwendig ist.

3

## Bezugszeichenliste

1 Spendegutbehälter

2 Flaschenhals

3 Anschlußteil

4 Distanzstrebe oder dergleichen

5 Ausgußteil

6 Meßraum

7 Einschnürung (von 10)

8 Ausgußbereich

9 Quetschlippe

10 Quetschlippe

11 Austrittsöffnung

12 Durchströmkanal

13 Befestigungsstelle

14 Spendegut

15 Achse

16 Einschnürung (von 9)

17 Vorraum

18 Innengewinde (von 3)

19 Außengewinde (von 2)

$\left.\begin{array}{c} \alpha \\ \beta \\ \gamma \\ \delta \end{array}\right\}$ Schwenk-, Biege-, Knickwinkel

**Patentansprüche**

1. Verfahren zum Dosieren von flüssigen Substanzen aus einem Spendegutbehälter,
   dadurch gekennzeichnet,
   daß mittels eines dem Behälterkopf zugeordneten, biegeelastischen Ausgußteils die Dosierung des Spendeguts erfolgt, in dem durch Schwenken, Biegen oder dergleichen des Ausgußteils ein zwischen mindestens zwei Quetschlippen liegender Meßraum gebildet wird, dessen Austrittsöffnung im Bereich einer ersten Quetschlippe erst öffnet, nachdem der Durchströmkanal im Bereich der zweiten Quetschlippe zum Spendebehälter geschlossen ist.

2. Verfahren nach Anspruch 1,
   dadurch gekennzeichnet,
   daß nachdem der Spendebehälter mit dem Behälterkopf nach unten weisend gewendet ist, sich der im

4

Ausgußteil befindliche Meßraum mit Spendegut füllt, wobei der Durchströmkanal zwischen Meßraum und Spendegutbehälter im Bereich der zweiten Quetschlippe geöffnet ist und die Austrittsöffnung im Bereich der ersten Quetschlippe geschlossen ist, danach das Ausgußteil gebogen, geknickt oder gleichartig verformt wird und der Durchströmkanal im Bereich der zweiten Quetschlippe gesperrt und somit zwischen den geschlossenen zwei Quetschlippen die Menge des Spendeguts festgelegt und dosiert wird, und durch weiteres Biegen, Knicken oder gleichartiges Verformen des Ausgußteils die Austrittsöffnung im Bereich der zweiten Quetschlippe öffnet und das dosierte Spendegut freigibt, in dem der Öffnungs- und Schließvorgang der Austrittsöffnung und des Durchströmkanals bzw. die Bildung der Quetschstellen/lippen mittels Verbindungsmittel oder dergleichen zeitlich voneinander abhängig sind.

3. Verfahren nach Anspruch 1 und 2,
dadurch gekennzeichnet,
daß der Spendebehälter und die Dosiervorrichtung in der Arbeitsposition sich unterhalb des Spendegutes befinden muß, und daß der Spendebehälter und die Dosiervorrichtung folgende Positionen annimmt:
- durch Einwirkung der Distanzstrebe (4) oder dergleichen wird der Ausgangsbereich (8) zu der Längsachse (15) in einem vorgegebenen Winkelbereich ($\beta$) gehalten, wodurch eine flüssigkeitsdichte Quetschlippe (10) entsteht (Fig. 1),
und
- daß durch das Drücken auf den Meßraum (6), in der Richtung (P), eine zweite Quetschlippe (9) entsteht (Fig. 3), und daß diese Quetschlippe (9) in einem vorgegebenen Winkelbereich zu der Längsachse (15) flüssigkeitsdicht bleibt, und gleichzeitig den Meßraum (6) von dem Spendebehältergut (14) trennt, und daß in dieser Position (Fig. 3) beide Quetschlippen (9, 10) dicht verschlossen bleiben,
und
- daß durch weiteres Drücken auf den Meßraum (6) in der Richtung (P) (Fig. 6) die Quetschlippe (10) mittels der Distanzstrebe (4) oder dergleichen geöffnet und somit das Volumen des Meßraumes (6) freigegeben wird, wobei die Quetschstelle (9) dicht verschlossen bleibt,
und
- daß nach dem loslassen des Meßraumes (6) entweder durch eigene Spannkraft oder durch die Spannkraft der Distanzstrebe (4) oder dergleichen, eine sofortige Verlagerung des Meßraumes (6) in die Ausgangsposition (Fig. 1) erfolgt, was ein dichtes Abschließen des Spendebehältergutes (14) mittels der Quetschlippe (10) wiedergegeben ist.

4. Vorrichtung zur Durchführung des Verfahrens nach Anspruch 1 bis 3,
dadurch gekennzeichnet,
daß ein mit einem Anschlußteil (3) für den Spendegutbehälter (1) versehenes, biegeelastisches Ausgußteil (5) mindestens zwei Quetschlippen (9, 10) aufweist, zwischen welchen durch Biegen, Knicken oder dergleichen des Ausgußteils (5) ein Meßraum (6) bildbar ist.

5. Vorrichtung nach Anspruch 4,
dadurch gekennzeichnet,
daß das Ausgußteil (5) rohrförmig ausgebildet ist.

6. Vorrichtung nach Anspruch 5,
dadurch gekennzeichnet,
daß das Ausgußteil (5) an dem, dem Spendegutbehälter (1) zugewandten Ende, ein Anschlußteil (3) zur flüssigkeitsdichten Verbindung mit dem Spendegutbehälter (1) aufweist.

7. Vorrichtung nach Anspruch 4 bis 6,
dadurch gekennzeichnet,
daß das Ausgußteil (5) einen Ausgußbereich (8), einen Meßraum (6), einen Anschlußteil (3) und einen, zwischen Meßraum (6) und Anschlußteil (3) liegenden Vorraum (17) aufweist, die zumindest teilweise miteinander einstückig ausgebildet sind.

8. Vorrichtung nach Anspruch 7 und mindestens einem der vorhergehenden Ansprüche,
dadurch gekennzeichnet,

daß das Anschlußteil (3) als separates Teil ausgebildet ist, welches das biegeelastische Ausgußteil (5) flüssigkeitsdicht auf den Spendegutbehälter (1) anpreßt.

9. Vorrichtung nach Anspruch 4 bis 8,
   dadurch gekennzeichnet,
   daß das Anschlußteil (3) ein Innengewinde (18) aufweist.

10. Vorrichtung nach Anspruch 4 bis 9,
    dadurch gekennzeichnet,
    daß das biegeelastische Ausgußteil (5) zur Bildung der Quetschlippen (9, 10) jeweils eine Einschnürung oder Verjüngung (7, 16) aufweist.

11. Vorrichtung nach Anspruch 4 bis 10,
    dadurch gekennzeichnet,
    daß das Ausgußteil (5) mindestens eine Distanzstrebe (4) aufweist.

12. Vorrichtung nach Anspruch 11,
    dadurch gekennzeichnet,
    daß die Distanzstrebe (4) eine fixierte Länge aufweist.

13. Vorrichtung nach Anspruch 4 und mindestens einem der vorhergehenden Ansprüche,
    dadurch gekennzeichnet,
    daß die Distanzstrebe (4) zwischen Ausgußbereich (8) und Anschlußteil (3) angeordnet ist.

14. Vorrichtung nach Anspruch 13,
    dadurch gekennzeichnet,
    daß die Distanzstrebe (4) zwischen Ausgußbereich (8) und Anschlußteil (3) in Ausgangsstellung derart angeordnet ist, daß die Quetschlippe (10) die Austrittsöffnung (11) sperrt und die Quetschlippe (9) den Durchströmkanal (12) freigibt.

15. Vorrichtung nach Anspruch 4 bis 14,
    dadurch gekennzeichnet,
    daß die Befestigungsstelle (13) zwischen Distanzstrebe (4) und Anschlußteil (3) drehbar, schwenkbar bzw. knickbar ausgebildet ist.

16. Vorrichtung nach Anspruch 4 und mindestens einem der vorhergehenden Ansprüche,
    dadurch gekennzeichnet,
    daß die Befestigungsstelle (13) als Gelenk ausgebildet ist.

Fig.1

Fig.2

_Fig.3_

_Fig.4_

EP 0 501 365 A2

# _Fig.5_

# _Fig.6_